# EUROPEAN PATENT SPECIFICATION

(11) **EP 3 451 160 B1**
(45) Date of publication and mention of the grant of the patent: **24.07.2024**
(21) Application number: 16899916.7
(22) Date of filing: 10.05.2016
(51) Int. Cl.: G06F 9/30, G06F 17/16

(54) **APPARATUS AND METHOD FOR PERFORMING VECTOR OUTER PRODUCT ARITHMETIC**
VORRICHTUNG UND VERFAHREN ZUR DURCHFÜHRUNG EINER AUSSENPRODUKTARITHMETIK EINES VEKTORS
APPAREIL ET PROCÉDÉ POUR EFFECTUER UNE ARITHMÉTIQUE DE PRODUIT EXTÉRIEUR VECTORIEL

(30) Priority: 26.04.2016 CN 201610266970
(43) Date of publication of application: 06.03.2019
(73) Proprietor: Cambricon Technologies Corporation Limited, Beijing 100191 (CN)
(72) Inventor: LUO, Tao, Beijing 100191 (CN); ZHI, Tian, Beijing 100191 (CN); LIU, Shaoli, Beijing 100191 (CN); CHEN, Tianshi, Beijing 100191 (CN); CHEN, Yunji, Beijing 100191 (CN)
(74) Representative: AWA Sweden AB
(86) International application number: PCT/CN2016/081526
(87) International publication number: WO 2017/185405

(56) References cited:
- EP-A1- 2 423 876
- CN-A- 102 156 637
- CN-A- 102 483 697
- CN-A- 103 959 233
- TW-A- 201 514 850
- US-A1- 2011 138 155
- US-A1- 2014 195 783
- MOSTAFA I SOLIMAN ED - ANONYMOUS: "Mat-core: A matrix core extension for general-purpose processors", COMPUTER ENGINEERING&SYSTEMS, 2007. ICCES '07. INTERNATIONAL CONFERENCE ON, IEEE, PI, 1 November 2007 (2007-11-01), pages 304 - 310, XP031212365, ISBN: 978-1-4244-1365-2

## Description

### TECHNICAL FIELD

The disclosure relates to a vector outer product operation device and method for performing a vector outer product operation according to a vector outer product operation instruction.

### BACKGROUND

In the vector space category, the homomorphism between objects is a linear map. In fact, however, we often encounter the concept of "bilinear map". For example, a dot product is a bilinear map *V* × *V* → *C*. In order to attribute the property of "bilinear" to the vector space category, one way is to construct a vector space *Z* associated with *V*, *W,* so that each bilinear map defined on *V* × *W* can be replaced by a unique linear map defined on *Z*, where *Z* is called a tensor product of *V* and *W* (also known as an outer product). For example, a calculated value of a vector outer product *a*×*b* is equal to |*a*|·|*b*|·sin<*a*, *b*>*.*

In the current computer field, more and more algorithms are now involving vector operations. Taking machine learning algorithms (i.e., mainstream algorithms of artificial intelligence in popular application fields) as an example, almost all existing classical algorithms of the machine learning algorithms contain a large number of vector outer product operations.

In the related art, one solution to conduct a vector outer product operation is to use general-purpose processors by executing general instructions via general-purpose register files and general-purpose functional units to perform a vector outer product operation. However, one defect of the solution is the low operation performance during a vector outer product operation because a single general-purpose processor is primarily used for scalar calculations. On the other hand, adopting multiple general-purpose processors for concurrent execution may lead to a possible performance bottleneck resulting from the intercommunication among the multiple general-purpose processors. In another related art, a vector calculation is conducted by adopting a graphics processing unit (GPU), where general-purpose register files and general-purpose stream processing units are configured to execute general single instruction multiple data (SIMD) instructions, thereby performing a vector outer product operation. Nonetheless, in the above-mentioned solution, GPU's on-chip small cache in performing large-scale vector outer product operations requires a constant transportation of off-chip data, which makes off-chip bandwidth a main performance bottleneck. In another related art, a specialized vector outer product operation device is adopted to perform vector calculations, where customized register files and processing units are used to perform a vector outer product operation. Limited by the register files, however, the present specialized vector outer product operation device is unable to flexibly support outer product operations of vectors of different lengths. EP2423876 A1 relates to an image processing apparatus, an image processing method, and an image processing program. US 2014/0195783 relates to dot product processors, methods, systems, and instructions. The present invention is defined by the appended set of claims. Preferred embodiments are defined by the dependent claims.

### SUMMARY

### (I)Technical problems to be solved

The disclosure aims to provide a vector outer product operation device and method to solve the problems existing in the related art, such as limited inter-chip communication, insufficient on-chip cache, and inflexible support for different vector lengths.

### (2)Technical solutions

The invention is defined by the appended claims. The disclosure provides a vector outer product operation device, which is configured to perform a vector outer product operation according to a vector outer product operation instruction. The device includes a storage unit, a register unit, and a vector outer product operation unit.

The storage unit is configured to store vectors.

The register unit is configured to store vector addresses, where the vector addresses are addresses of the vectors stored in the storage unit.

The vector outer product operation unit is configured to acquire the vector outer product operation instruction, to acquire vector addresses from the register unit according to the vector outer product operation instruction, to acquire vectors from the storage unit according to the vector addresses acquired, and to perform the vector outer product operation on the vectors acquired to obtain a result of the vector outer product operation.

The disclosure further provides a vector outer product operation method, which is configured to perform a vector outer product operation according to a vector outer product operation instruction. The method includes the following operations.

At S 1, vectors are stored.

At S2, vector addresses are stored.

At S3, the vector outer product operation instruction is acquired, vector addresses are acquired according to the vector outer product operation instruction, vectors are acquired according to the vector addresses acquired, and the vector outer product operation is performed on the vectors acquired, to obtain a result of the vector outer product operation.

### (3)Advantageous effects

According to the vector outer product operation device and method of the disclosure, vector data involved in calculation can be temporarily stored into a scratchpad memory. In the case of only transmitting a same instruction, data of different widths can be supported more flexibly and effectively in the vector outer product operation unit, and correlation problems in data storing can be solved, therefore an execution performance of a task including a large number of vector calculations can be improved. In addition, an instruction set adopted by the disclosure is convenient to use and flexible in supporting vectors of different lengths.

The disclosure can be applied to the following (including but not limited to) scenarios: a data processing device, a robot, a computer, a printer, a scanner, a telephone, a tablet, a smart terminal, a mobile phone, a driving recorder, a navigator, a sensor, a webcam, a cloud server, a camera, a video camera, a projector, a watch, headphones, a mobile storage, a wearable device, and other electronic products; an airplane, a ship, a car, and other vehicles; a television (TV), an air conditioner, a microwave oven, a refrigerator, an electric cooker, a humidifier, a washing machine, an electric lamp, a gas stove, a hood, and other home appliances; a nuclear magnetic resonance spectrometer, a B-ultrasonic, an electrocardiograph, and other medical equipment.

### BRIEF DESCRIPTION OF THE DRAWINGS

FIG. 1 is a schematic structural diagram illustrating a vector outer product operation device according to an embodiment of the present disclosure.
FIG. 2 is a schematic diagram of the format of an instruction set according to an embodiment of the present disclosure.
FIG. 3 is a schematic structural diagram illustrating a vector outer product operation device according to an embodiment of the present disclosure.
FIG. 4 is a schematic flow diagram illustrating a method for performing a vector outer product operation instruction through a vector outer product operation device according to an embodiment of the present disclosure.
FIG. 5 is a schematic structural diagram illustrating a vector outer product operation unit according to an embodiment of the present disclosure.

### DETAILED DESCRIPTION

The disclosure provides a vector outer product operation device and a corresponding instruction set. The device includes a storage unit, a register unit, and a vector outer product operation unit. The storage unit is configured to store vectors. The register unit is configured to store addresses of the vectors stored. The vector outer product operation unit is configured to acquire vector addresses from the register unit according to a vector outer product operation instruction, to acquire vectors from the storage unit according to the vector addresses acquired, and to perform a vector outer product operation on the vectors acquired to obtain a result of the vector outer product operation. According to the disclosure, vector data involved in calculation can be temporarily stored into a scratchpad memory, so that data of different widths can be supported more flexibly and effectively in a vector outer product operation process, and it is possible to improve an execution performance of a task including a large number of vector calculations.

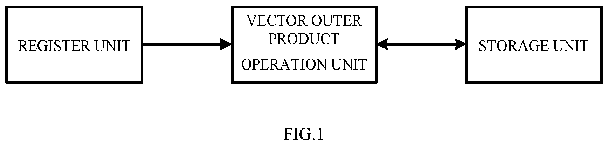

FIG. 1 is a schematic structural diagram illustrating a vector outer product operation device according to an embodiment of the present disclosure. As illustrated in FIG. 1, the device includes a storage unit, a register unit, and a vector outer product operation unit.

The storage unit is configured to store vectors. In one implementation, the storage unit can be a scratchpad memory capable of supporting vector data of different sizes. The disclosure is able to temporarily store required calculation data into a scratchpad memory, to enable the operation device to more flexibly and effectively support data of different widths during vector outer product operations. It may be understood that, the storage unit includes, but is not limited to, a variety of different memory devices, such as a static random access memory (SRAM), an enhanced dynamic random access memory (eDRAM), a dynamic random access memory (DRAM), a memristor, a 3D-DRAM, a non-transitory memory, or the like.

The register unit is configured to store vector addresses, where the vector addresses are addresses of the vectors stored in the storage unit. In one implementation, the register unit can be a scalar register file, to provide scalar registers required for an operation. It should be noted that, the scalar register is configured to store not only vector addresses but also scalar data. When an operation of a vector and a scalar is performed, the vector outer product operation unit acquires not only a vector address but also a corresponding scalar from the register unit.

The vector outer product operation unit is configured to acquire a vector outer product operation instruction, to acquire vector addresses from the register unit according to the vector outer product operation instruction, to acquire vectors from the storage unit according to the vector addresses acquired, to perform a vector outer product operation on the vectors acquired to obtain a result of the vector outer product operation, and to store the result of the vector outer product operation into the storage unit.

According to one implementation of the disclosure, the vector outer product operation unit includes an addition section, a nonlinear operation section, and a multiplication section. Meanwhile, the vector outer product operation unit has a structure of multiple-stage pipeline, where the addition section is arranged in a first stage pipeline, the nonlinear operation section is arranged in a second stage pipeline, and the multiplication section is arranged in a third stage pipeline. For example, when calculating *a*× *b*=|*a*|•|*b*|•sin<*a*, *b*>, the addition section of the first stage pipeline is configured to calculate |*a*| and |*b*|, the nonlinear operation section of the second stage pipeline is configured to calculate sin<*a*, *b*>*,* and the multiplication section of the third stage pipeline is configured to calculate |*a*|•|*b*|•sin<*a*, *b*>*.* Due to the fact that the sections mentioned-above are arranged in different pipeline stages, when sequential order of successive serial multiple vector outer product operation instructions is consistent with sequential order of pipeline stages of corresponding sections, operations as demanded by the serial multiple vector outer product operation instructions can be implemented more efficiently.

According to one implementation of the disclosure, the vector outer product operation device further includes an instruction cache unit. The instruction cache unit is configured to store vector outer product operation instructions to be executed. It should be understood that, one instruction (for example, a vector outer product operation instruction) will be cached in the instruction cache unit while being executed. When execution of an instruction is completed, if the instruction is also the earliest one among instructions that have not been submitted and are in the instruction cache unit, the instruction will be submitted. Once the instruction above is submitted, status change of the device (i.e., the vector outer product operation device) caused by operations performed by the instruction cannot be cancelled. In an implementation, the instruction cache unit can be a reordering cache.

According to one implementation of the disclosure, the vector outer product operation device further includes an instruction processing unit. The instruction processing unit is configured to acquire a vector outer product operation instruction from the instruction cache unit, to process the vector outer product operation instruction acquired, and to provide the vector outer product operation instruction processed for the vector outer product operation unit. In an implementation, the instruction processing unit includes an instruction fetching module, a decoding module, and an instruction queue.

The instruction fetching module is configured to acquire the vector outer product operation instruction from the instruction cache unit.

The decoding module is configured to decode the vector outer product operation instruction acquired from the instruction cache unit.

The instruction queue is configured to sequentially store the vector outer product operation instruction decoded, and, considering that different instructions may have dependency relationships on registers included, to cache the vector outer product operation instruction decoded and then to send the vector outer product operation instruction cached when a dependency relationship is eliminated.

According to one implementation of the disclosure, the vector outer product operation device further includes a dependency relationship processing unit. The dependency relationship processing unit is configured to: determine whether the vector outer product operation instruction accesses the same vector as a previous vector outer product operation instruction (in other words, determine whether the vector outer product operation instruction and a previous vector outer product operation instruction access a same vector), before the vector outer product operation unit acquires the vector outer product operation instruction; and store the vector outer product operation instruction into a storage queue based on a determination that the vector outer product operation instruction accesses the same vector as the previous vector outer product operation instruction, and provide the vector outer product operation instruction in the storage queue for the vector outer product operation unit after execution of the previous vector outer product operation instruction is completed; or provide the vector outer product operation instruction for the vector outer product operation unit directly, based on a determination that the vector outer product operation instruction does not access the same vector as the previous vector outer product operation instruction. As an example, when the vector outer product operation instruction (i.e., a current vector outer product operation instruction) accesses a scratchpad memory, the previous vector outer product operation instruction and the vector outer product operation instruction may access a same memory space. In order to ensure the correctness of an execution result of the vector outer product operation instruction, if data of the current vector outer product operation instruction is detected to have a dependency relationship with data of the previous vector outer product operation instruction, the vector outer product operation instruction must wait within the storage queue until the dependency relationship is eliminated.

According to one implementation of the disclosure, the vector outer product operation device further includes an input/output (I/O) unit. The I/O unit is configured to store the vectors into the storage unit, or to acquire the result of the vector outer product operation from the storage unit. In an implementation, the I/O unit can be a direct storage unit and responsible for reading vector data from a memory or writing vector data into the memory.

The disclosure further provides a vector outer product operation method, which is configured to perform a vector outer product operation according to a vector outer product operation instruction. The method includes the following operations.

At S 1, vectors are stored.

At S2, vector addresses (i.e., addresses of the vectors stored) are stored.

At S3, the vector outer product operation instruction is acquired, vector addresses are acquired according to the vector outer product operation instruction, vectors are acquired according to the vector addresses acquired, and the vector outer product operation is performed on the vectors acquired to obtain a result of the vector outer product operation.

According to one implementation of the disclosure, the method further includes the follows prior to the operation S3.

Vector outer product operation instructions are stored.

A vector outer product operation instruction is acquired from the vector outer product operation instructions stored.

The vector outer product operation instruction acquired is decoded.

The vector outer product operation instruction decoded is sequentially stored.

According to one implementation of the disclosure, the method further includes the follows prior to the operation S3.

Whether the vector outer product operation instruction accesses the same vector as a previous vector outer product operation instruction is determined (in other words, whether the vector outer product operation instruction and a previous vector outer product operation instruction access a same vector is determined). When the vector outer product operation instruction accesses the same vector as the previous vector outer product operation instruction, store the vector outer product operation instruction into a storage queue, and advance to the operation S3 after execution of the previous vector outer product operation instruction is completed; otherwise, advance to the operation S3 directly.

According to one implementation of the disclosure, the method further includes an operation of storing the result of the vector outer product operation.

According to one implementation of the disclosure, the operation S1 includes an operation of storing the vectors into a scratchpad memory.

According to one implementation of the disclosure, the vector outer product operation instruction includes an operation code and at least one operation field, where the operation code is configured to indicate a function of the vector outer product operation instruction, and the operation field is configured to indicate data information of the vector outer product operation instruction.

According to one implementation of the disclosure, the vector outer product operation includes an addition operation, a nonlinear operation, and a multiplication operation.

According to one implementation of the disclosure, a vector outer product operation unit has a structure of multiple-stage pipeline, and the structure of multiple-stage pipeline includes a first stage pipeline, a second stage pipeline, and a third stage pipeline. In an implementation, the addition operation is performed at the first stage pipeline, the nonlinear operation is performed at the second stage pipeline, and the multiplication operation is performed at the third stage pipeline.

According to one implementation of the disclosure, the instruction set adopts fixed length instructions.

In the process of performing a vector outer product operation, the vector outer product operation device fetches a vector outer product operation instruction for decoding, and then sends the vector outer product operation instruction decoded to the instruction queue for storing. The vector outer product operation device acquires parameters of the vector outer product operation instruction stored according to a decoding result. In an implementation, the parameters can be parameters which are directly written in an operation field of the vector outer product operation instruction, or can be parameters which are read from a specified register according to a register number of the operation field of the vector outer product operation instruction. One advantage of using a register to store the parameters is that there is no need to change the vector outer product operation instruction itself. As long as values of the register are changed by the vector outer product operation instruction, most of loops can be realized, which greatly saves the number of instructions required to solve some practical problems. After all the parameters for operating are acquired, whether the vector outer product operation instruction is immediately sent to the vector outer product operation unit can be determined according to a result determined by the dependency relationship processing unit (i.e., "data required by the vector outer product operation instruction has a dependency relationship with data required by the previous vector outer product operation instruction" or "data required by the vector outer product operation instruction does not have a dependency relationship with data required by the previous vector outer product operation instruction"). Once a dependency relationship is found between data of the vector outer product operation instruction and data of the previous vector outer product operation instruction, the vector outer product operation instruction must wait until execution of the depended previous vector outer product operation instruction is completed, and then the vector outer product operation instruction can be sent to the vector outer product operation unit for execution. In a specialized operation unit, the vector outer product operation instruction will be executed quickly, and a result (i.e., a result of a vector outer product operation) is written back to an address provided by the vector outer product operation instruction. In this situation, the execution of the vector outer product operation instruction is completed.

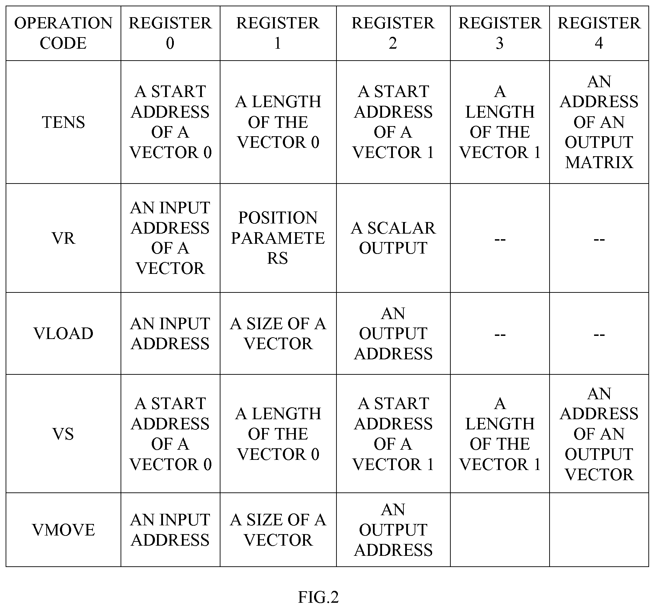

FIG. 2 is a schematic diagram of the format of an instruction set according to an embodiment of the present disclosure. As illustrated in FIG. 2, a vector outer product operation instruction includes an operation code and a plurality of operation fields. The operation code is configured to indicate a function of the vector outer product operation instruction, and a vector outer product operation unit can perform a vector outer product operation by identifying the operation code. The operation field is configured to indicate data information of the vector outer product operation instruction, where the data information can be immediate data or a register number (in other words, a register unit number). For example, to acquire a vector, a start address and a length of the vector can be obtained from a register according to a register number, and then the vector stored in a corresponding address can be obtained from the storage unit according to the start address and the length of the vector.

The instruction set contains instructions different in functions:

A tensor (TENS) product instruction. For the tensor (TENS) product instruction, a device (for example, a vector outer product operation device) is configured to respectively extract vector data of a specified size from specified addresses of a scratchpad memory. Then, in a vector calculation unit, an outer product operation is performed on two vectors. Finally, a result is written back into a specified address of a scalar register file.

A vector retrieval (VR) instruction. For the vector retrieval (VR) instruction, a device is configured to retrieve vector data of a specified size from a specified address of a scratchpad memory. Then, in a vector calculation unit, an element of a vector is extracted according to a specified position to serve as an output. Finally, a result is written back into a specified address of a scalar register file.

A vector load (VLOAD) instruction. For the vector load (VLOAD) instruction, a device is configured to load vector data of a specified size from a specified external source address to a specified address of a scratchpad memory.

A vector storage (VS) instruction. For the vector storage (VS) instruction, a device is configured to store vector data of a specified size from a specified address of a scratchpad memory into an external destination address.

A vector movement (VMOVE) instruction. For the vector movement (VMOVE) instruction, a device is configured to store (in other words, move) vector data of a specified size from a specified address of a scratchpad memory into another specified address of the scratchpad memory.

To illustrate objects, technical solutions, and advantageous effects of the disclosure more clearly, the disclosure will be further described in detail below with reference to specific embodiments of the disclosure and accompanying drawings.

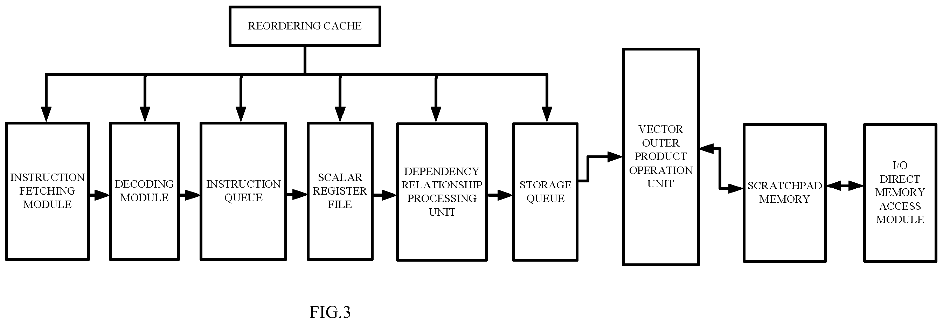

FIG. 3 is a schematic structural diagram illustrating a vector outer product operation device according to an embodiment of the present disclosure. As illustrated in FIG. 3, the vector outer product operation device includes an instruction fetching module, a decoding module, an instruction queue, a scalar register file, a dependency relationship processing unit, a storage queue, a reordering cache, a vector outer product operation unit, a scratchpad memory, and an input/output (I/O) direct memory access module.

The instruction fetching module is configured to fetch a next instruction (i.e., a vector outer product operation instruction) to be executed from an instruction sequence, and to transmit the instruction fetched to the decoding module.

The decoding module is configured to decode the instruction transmitted, and to transmit the instruction decoded to the instruction queue.

Considering that different instructions may have dependency relationships on scalar registers included, the instruction queue is configured to cache the instruction decoded, and to transmit the instruction cached after a dependency relationship is eliminated.

The scalar register file is configured to provide scalar registers required by the vector outer product operation device during an operation.

For the dependency relationship processing unit, a vector outer product operation instruction (also known as a current instruction) processed by the dependency relationship processing unit may have a dependency relationship with a previous vector outer product operation instruction (also known as a previous instruction). When the vector outer product operation instruction accesses a scratchpad memory, the previous vector outer product operation instruction and the vector outer product operation instruction may access a same memory space. In order to ensure the correctness of an execution result of the vector outer product operation instruction, if data of the vector outer product operation instruction is detected to have a dependency relationship with data of the previous vector outer product operation instruction, the vector outer product operation instruction must wait within the storage queue until the dependency relationship is eliminated.

The storage queue is a sequential queue, when the data of the vector outer product operation instruction has a dependency relationship with the data of the previous vector outer product operation instruction, the vector outer product operation instruction will be stored in the sequential queue until the dependency relationship is eliminated.

For the reordering cache, the vector outer product operation instruction is cached in the reordering cache while being executed. When execution of a vector outer product operation instruction is completed, if the vector outer product operation instruction is also the earliest one among instructions that have not been submitted and are in the reordering cache, the vector outer product operation instruction will be submitted. Once the vector outer product operation instruction is submitted, status change of the vector outer product operation device caused by operations performed by the vector outer product operation instruction cannot be cancelled.

The vector outer product operation unit is responsible for all outer product operations of the vector outer product operation device, and the vector outer product operation instruction is sent to the vector outer product operation unit for execution.

The scratchpad memory is a temporary storage device dedicated to vector data, and can support vector data of different sizes.

The I/O direct memory access module is configured to directly access the scratchpad memory and responsible for reading data from or writing data into the scratchpad memory.

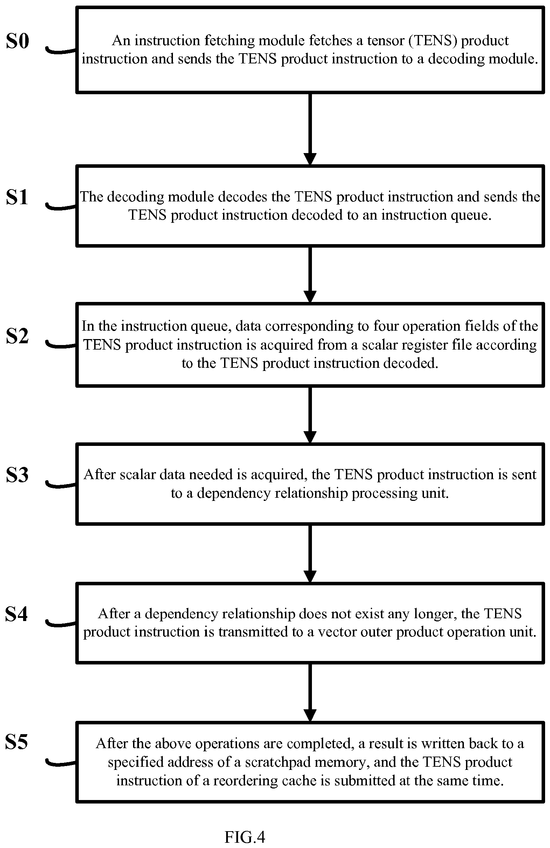

FIG. 4 is a schematic flow diagram illustrating a method for performing a vector outer product operation instruction through a vector outer product operation device according to an embodiment of the present disclosure. As illustrated in FIG. 4, a manner of performing a tensor (TENS) product instruction (i.e. vector outer product operation instruction) is as follows.

At S0, an instruction fetching module fetches the tensor (called as TENS for short) product instruction, and sends the TENS product instruction to a decoding module.

At S1, the decoding module decodes the TENS product instruction, and sends the TENS product instruction decoded to an instruction queue.

At S2, in the instruction queue, data corresponding to four operation fields of the TENS product instruction is acquired from a scalar register file according to the TENS product instruction decoded. In an implementation, the data acquired from the scalar register file includes a start address of a vector *vino,* a length of the vector *vino,* a start address of a vector *vin*₁, and a length of the vector *vin*₁*.*

At S3, after scalar data needed is acquired, the TENS product instruction is sent to a dependency relationship processing unit. The dependency relationship processing unit analyzes whether there is a dependency relationship between data of the TENS product instruction and data of an uncompleted previous tensor (TENS) product instruction. The TENS product instruction needs to wait (in other words, the TENS product instruction is cached) in a storage queue until there is no dependency relationship between the data of the TENS product instruction and the data of the uncompleted previous TENS product instruction.

At S4, after the dependency relationship between the data of the TENS product instruction and the data of the uncompleted previous TENS product instruction does not exist any longer, the TENS product instruction is transmitted to a vector outer product operation unit. The vector outer product operation unit retrieves needed vectors from a scratchpad memory according to addresses and lengths of needed data, and then a vector outer product operation is performed in the vector outer product operation unit.

At S5, after the above operations are completed, a result is written back to a specified address of the scratchpad memory, and the TENS product instruction of a reordering cache is submitted at the same time.

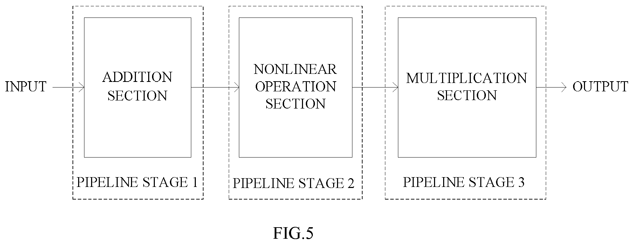

FIG. 5 is a schematic structural diagram illustrating a vector outer product operation unit according to an embodiment of the present disclosure. As illustrated in FIG. 5, the vector outer product operation unit includes an addition section, a nonlinear operation section, and a multiplication section. Meanwhile, the vector outer product operation unit has a structure of multiple-stage pipeline, where the addition section is arranged at a pipeline stage 1, the nonlinear operation section is arranged at a pipeline stage 2, and the multiplication section is arranged at a pipeline stage 3. Since these sections are arranged in different pipeline stages, when sequential order of successive serial multiple vector outer product operations is consistent with sequential order of pipeline stages of corresponding sections, operations as demanded by the series of vector outer product operation instructions can be achieved more effectively.

Although the objects, technical solutions and advantageous effects of the present disclosure has been described in detail according to certain embodiments, it should be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law

## Claims

1. A vector outer product operation device, configured to perform a vector outer product operation according to a vector outer product operation instruction, the device comprising:
a storage unit, configured to store vectors;
a plurality of register units, configured to store vector addresses, wherein the vector addresses are addresses of the vectors stored in the storage unit; and
a vector outer product operation unit, configured to acquire the vector outer product operation instruction, to acquire vector addresses from the register unit according to the vector outer product operation instruction, to acquire vectors from the storage unit according to the vector addresses acquired, and to perform the vector outer product operation on the vectors acquired to obtain a result of the vector outer product operation;
wherein the vector outer product operation instruction comprises an operation code and at least two operation fields;
wherein the operation code is configured to indicate a function of the vector outer product operation instruction; and
wherein the at least two operation fields are configured to indicate data information of the vector outer product operation instruction;
wherein the data information comprises at least two register unit numbers, and the vector outer product operation unit is configured to access at least two register units of the plurality of register units according to the at least two register unit numbers to acquire a vector address;
wherein a start address and a length of a vector are respectively obtained from the at least two register units according to the at least two register unit numbers, for obtaining the vector stored in a corresponding address from the storage unit according to the start address and the length of the vector.

2. The device of claim 1, further comprising:
an instruction cache unit, configured to store vector outer product operation instructions to be executed.

3. The device of claim 2, further comprising:
an instruction processing unit, configured to acquire a vector outer product operation instruction from the instruction cache unit, to process the vector outer product operation instruction acquired from the instruction cache unit, and to provide the vector outer product operation instruction processed for the vector outer product operation unit.

4. The device of claim 3, wherein the instruction processing unit comprises:
an instruction fetching module, configured to acquire the vector outer product operation instruction from the instruction cache unit;
a decoding module, configured to decode the vector outer product operation instruction acquired from the instruction cache unit; and
an instruction queue, configured to sequentially store the vector outer product operation instruction decoded.

5. The device of claim 1, further comprising a dependency relationship processing unit configured to:
determine whether the vector outer product operation instruction accesses the same vector as a previous vector outer product operation instruction, before the vector outer product operation unit acquires the vector outer product operation instruction; and
store the vector outer product operation instruction into a storage queue based on a determination that the vector outer product operation instruction accesses the same vector as the previous vector outer product operation instruction, and provide the vector outer product operation instruction in the storage queue for the vector outer product operation unit after execution of the previous vector outer product operation instruction is completed; or
provide the vector outer product operation instruction for the vector outer product operation unit directly, based on a determination that the vector outer product operation instruction does not access the same vector as the previous vector outer product operation instruction.

6. The device of claim 1, wherein the storage unit is further configured to store the result of the vector outer product operation.

7. The device of claim 6, further comprising:
an input/output, I/O, unit, configured to store the vectors into the storage unit, or to acquire the result of the vector outer product operation from the storage unit.

8. The device of claim 1, wherein the storage unit is a scratchpad memory.

9. The device of claim 1, wherein the vector outer product operation unit comprises an addition section, a nonlinear operation section, and a multiplication section.

10. The device of claim 9, wherein the vector outer product operation unit has a structure of multiple-stage pipeline, and the structure of multiple-stage pipeline comprises a first stage pipeline, a second stage pipeline, and a third stage pipeline; wherein the addition section is arranged in the first stage pipeline, the nonlinear operation section is arranged in the second stage pipeline, and the multiplication section is arranged in the second stage pipeline.

11. The device of any one of claims 1-10, wherein the device is configured to
respectively retrieve vector data of a specified size from specified addresses of the storage unit,
perform an outer product operation on two vectors in a vector calculation unit, and
write back a result into a specified address of a scalar register, according to the vector outer product operation instruction.

12. The device of claim 11, wherein the vector outer product operation instruction further comprises any of:
a vector retrieval, VR, instruction, wherein the device is configured to retrieve vector data of a specified size from a specified address of the storage unit, to extract an element of a vector according to a specified position to serve as an output in a vector calculation unit, to write back a result into a specified address of a scalar register, according to said instruction;
a vector load, VLOAD, instruction, wherein the device is configured to load vector data of a specified size from a specified external source address to a specified address of the storage unit, according to said instruction;
a vector storage, VS, instruction, wherein the device is configured to store vector data of a specified size from a specified address of the storage unit into an external destination address, according to said instruction; and
a vector movement, VMOVE, instruction, wherein the device is configured to store vector data of a specified size from a specified address of the storage unit into another specified address of the storage unit, according to said instruction.

13. A vector outer product operation method, configured to perform a vector outer product operation according to a vector outer product operation instruction, the method comprising:
S1, storing vectors by using a storage unit;
S2, storing vector addresses by using a plurality of register units, wherein the vector addresses are addresses of the vectors stored in the storage unit; and
S3, by using a vector outer product operation unit, acquiring, the vector outer product operation instruction, acquiring vector addresses according to the vector outer product operation instruction, acquiring vectors according to the vector addresses acquired, and performing the vector outer product operation on the vectors acquired to obtain a result of the vector outer product operation;
wherein the vector outer product operation instruction comprises an operation code and at least two operation fields;
wherein the operation code is configured to indicate a function of the vector outer product operation instruction and the at least two operation fields are configured to indicate data information of the vector outer product operation instruction;
wherein the data information comprises at least two register unit numbers;
wherein the method further comprises:
accessing, by the vector outer product operation unit, at least two register units of the plurality of register units according to the at least two register unit numbers to acquire a vector address;
wherein a start address and a length of a vector are respectively obtained from the at least two register units according to the at least two register unit numbers, for obtaining the vector stored in a corresponding address from the storage unit according to the start address and the length of the vector.

14. The method of claim 13, further comprising the following operations prior to the operation S3:
storing, by using an instruction cache unit, vector outer product operation instructions;
acquiring, by using an instruction processing unit, a vector outer product operation instruction from the vector outer product operation instructions stored;
decoding, by using a decoding module, the vector outer product operation instruction acquired; and
sequentially storing the vector outer product operation instruction decoded.

15. The method of claim 13, further comprising, by using a dependency relationship processing unit, the following operations prior to the operation S3:
determining whether the vector outer product operation instruction accesses the same vector as a previous vector outer product operation instruction; and
storing the vector outer product operation instruction into a storage queue based on a determination that the vector outer product operation instruction accesses the same vector as the previous vector outer product operation instruction, and advancing to the operation S3 after execution of the previous vector outer product operation instruction is completed; or
advancing to the operation S3 directly, based on a determination that the vector outer product operation instruction does not access the same vector as the previous vector outer product operation instruction.

16. The method of claim 13, further comprising:
storing the result of the vector outer product operation.

17. The method of claim 13, wherein the operation S1 comprises:
storing the vectors into a scratchpad memory.

18. The method of claim 13, wherein the vector outer product operation comprises an addition operation, a nonlinear operation, and a multiplication operation.

19. The method of claim 13, wherein the vector outer product operation unit has a structure of multiple-stage pipeline, and the structure of multiple-stage pipeline comprises a first stage pipeline (1), a second stage pipeline (2), and a third stage pipeline (3); wherein the addition operation is performed at the first stage pipeline (1), the nonlinear operation is performed at the second stage pipeline (2), and the multiplication operation is performed at the third stage pipeline (3).

20. The method of any one of claims 13-19, further comprising:
respectively retrieving vector data of a specified size from specified addresses of the storage unit,
performing an outer product operation on two vectors in a vector calculation unit, and
writing back a result into a specified address of a scalar register, according to the vector outer product operation instruction.

21. The method of claim 20, wherein the vector outer product operation instruction further comprises any of:
a vector retrieval, VR, instruction, wherein the method comprises:
retrieving vector data of a specified size from a specified address of the storage unit,
extracting an element of a vector according to a specified position to serve as an output in a vector calculation unit,
writing back a result into a specified address of a scalar register, according to said instruction;
a vector load, VLOAD, instruction, wherein the method comprises:
loading vector data of a specified size from a specified external source address to a specified address of the storage unit, according to said instruction;
a vector storage, VS, instruction, wherein the method comprises:
storing vector data of a specified size from a specified address of the storage unit into an external destination address, according to said instruction;
a vector movement, VMOVE, instruction, wherein the method comprises:
storing vector data of a specified size from a specified address of the storage unit into another specified address of the storage unit, according to said instruction.

## Patentansprüche

1. Vektor-Außenprodukt-Operationsvorrichtung, die dafür konfiguriert ist, eine Vektor-Außenprodukt-Operation gemäß einer Vektor-Außenprodukt-Operationsinstruktion durchzuführen, wobei die Vorrichtung umfasst:
eine Speichereinheit, die zum Speichern von Vektoren konfiguriert ist;
mehrere Registereinheiten, die zum Speichern von Vektoradressen konfiguriert sind, wobei die Vektoradressen Adressen der in der Speichereinheit gespeicherten Vektoren sind; und
eine Vektor-Außenprodukt-Operationseinheit, die dafür konfiguriert ist, die Vektor-Außenprodukt-Operationsinstruktion zu erfassen, Vektoradressen aus der Registereinheit gemäß der Vektor-Außenprodukt-Operationsinstruktion zu erfassen, Vektoren aus der Speichereinheit gemäß den erfassten Vektoradressen zu erfassen, und die Vektor-Außenprodukt-Operation an den erfassten Vektoren durchzuführen, um ein Ergebnis der Vektor-Außenprodukt-Operation zu erhalten;
wobei die Vektor-Außenprodukt-Operationsinstruktion einen Operationscode und mindestens zwei Operationsfelder umfasst;
wobei der Operationscode dafür konfiguriert ist, eine Funktion der Vektor-Außenprodukt-Operationsinstruktion anzugeben; und
wobei die mindestens zwei Operationsfelder dafür konfiguriert sind, Dateninformationen der Vektor-Außenprodukt-Operationsinstruktion anzugeben;
wobei die Dateninformationen mindestens zwei Registereinheitsnummern umfassen und die Vektor-Außenprodukt-Operationseinheit dafür konfiguriert ist, auf mindestens zwei Registereinheiten der mehreren Registereinheiten gemäß den mindestens zwei Registereinheitsnummern zuzugreifen, um eine Vektoradresse zu erfassen;
wobei eine Startadresse und eine Länge des Vektors jeweils aus den mindestens zwei Registereinheiten gemäß den mindestens zwei Registereinheitsnummern erhalten werden, um den in einer entsprechenden Adresse gespeicherten Vektor aus der Speichereinheit gemäß der Startadresse und der Länge des Vektors zu erhalten.

2. Vorrichtung nach Anspruch 1, die des Weiteren umfasst:
eine Instruktions-Cache-Einheit, die dafür konfiguriert ist, auszuführende Vektor-Außenprodukt-Operationsinstruktionen zu speichern.

3. Vorrichtung nach Anspruch 2, die des Weiteren umfasst:
eine Instruktionsverarbeitungseinheit, die dafür konfiguriert ist, eine Vektor-Außenprodukt-Operationsinstruktion von der Instruktions-Cache-Einheit zu erfassen, die aus der Instruktions-Cache-Einheit erfasste Vektor-Außenprodukt-Operationsinstruktion zu verarbeiten, und die verarbeitete Vektor-Außenprodukt-Operationsinstruktion für die Vektor-Außenprodukt-Operationseinheit bereitzustellen.

4. Vorrichtung nach Anspruch 3, wobei die Instruktionsverarbeitungseinheit umfasst:
ein Instruktionsholmodul, das dafür konfiguriert ist, die Vektor-Außenprodukt-Operationsinstruktion aus der Instruktions-Cache-Einheit zu erfassen;
ein Decodiermodul, das dafür konfiguriert ist, den aus der Instruktions-Cache-Einheit erfassten Vektor-Außenprodukt-Operationsinstruktion zu decodieren; und
eine Instruktionswarteschlange, die dafür konfiguriert ist, die decodierte Vektor-Außenprodukt-Operationsinstruktion sequentiell zu speichern.

5. Vorrichtung nach Anspruch 1, die des Weiteren eine Abhängigkeitsbeziehungs-Verarbeitungseinheit umfasst, die dafür konfiguriert ist:
Bestimmen, ob die Vektor-Außenprodukt-Operationsinstruktion auf denselben Vektor zugreift wie eine vorherige Vektor-Außenprodukt-Operationsinstruktion, bevor die Vektor-Außenprodukt-Operationseinheit die Vektor-Außenprodukt-Operationsinstruktion erfasst; und
Speichern der Vektor-Außenprodukt-Operationsinstruktion in einer Speicherwarteschlange auf der Grundlage einer Bestimmung, dass die Vektor-Außenprodukt-Operationsinstruktion auf denselben Vektor zugreift wie die vorherige Vektor-Außenprodukt-Operationsinstruktion, und Bereitstellen der Vektor-Außenprodukt-Operationsinstruktion in der Speicherwarteschlange für die Vektor-Außenprodukt-Operationseinheit, nachdem die Ausführung der vorherigen Vektor-Außenprodukt-Operationsinstruktion abgeschlossen ist;
oder
direktes Übermitteln der Vektor-Außenprodukt-Operationsinstruktion an die Vektor-Außenprodukt-Operationseinheit auf der Grundlage einer Bestimmung, dass die Vektor-Außenprodukt-Operationsinstruktion nicht auf denselben Vektor zugreift wie die vorherige Vektor-Außenprodukt-Operationsinstruktion.

6. Vorrichtung nach Anspruch 1, wobei die Speichereinheit des Weiteren dafür konfiguriert ist, das Ergebnis der Vektoraußenproduktoperation zu speichern.

7. Vorrichtung nach Anspruch 6, die des Weiteren umfasst:
eine Eingabe/Ausgabe (E/A)-Einheit, die dafür konfiguriert ist, die Vektoren in der Speichereinheit zu speichern oder das Ergebnis der Vektor-Außenprodukt-Operation aus der Speichereinheit zu erfassen.

8. Vorrichtung nach Anspruch 1, wobei die Speichereinheit ein Scratchpad-Speicher ist.

9. Vorrichtung nach Anspruch 1, wobei die Vektor-Außenprodukt-Operationseinheit einen Additionsabschnitt, einen nicht-linearen Operationsabschnitt und einen Multiplikationsabschnitt umfasst.

10. Vorrichtung nach Anspruch 9, wobei die Vektor-Außenprodukt-Operationseinheit eine Struktur einer mehrstufigen Pipeline aufweist und die Struktur der mehrstufigen Pipeline eine Pipeline einer ersten Stufe, eine Pipeline einer zweiten Stufe und eine Pipeline einer dritten Stufe umfasst; wobei der Additionsabschnitt in der Pipeline einer ersten Stufe angeordnet ist, der nicht-lineare Operationsabschnitt in der Pipeline einer zweiten Stufe angeordnet ist und der Multiplikationsabschnitt in der Pipeline einer zweiten Stufe angeordnet ist.

11. Vorrichtung nach einem der Ansprüche 1-10, wobei die Vorrichtung dafür konfiguriert ist,
jeweils Vektordaten einer spezifizierten Größe von spezifizierten Adressen der Speichereinheit abzurufen,
eine Außenprodukt-Operation an zwei Vektoren in einer Vektorberechnungseinheit durchzuführen, und
ein Ergebnis in eine spezifizierte Adresse eines Skalarregisters gemäß der Vektor-Außenprodukt-Operationsinstruktion zurückzuschreiben.

12. Vorrichtung nach Anspruch 11, wobei die Vektor-Außenprodukt-Operationsinstruktion des Weiteren eines oder mehrere von Folgendem umfasst:
eine Vektorabruf (Vector Retrieval, VR)-Instruktion, wobei die Vorrichtung dafür konfiguriert ist, Vektordaten einer spezifizierten Größe von einer spezifizierten Adresse der Speichereinheit abzurufen, ein Element eines Vektors gemäß einer spezifizierten Position zu extrahieren, um als eine Ausgabe in einer Vektorberechnungseinheit zu dienen, und gemäß der Instruktion ein Ergebnis in eine spezifizierte Adresse eines Skalarregisters zurückzuschreiben;
eine Vektorlade (Vector Load, VLOAD)-Instruktion, wobei die Vorrichtung dafür konfiguriert ist, Vektordaten einer spezifizierten Größe von einer spezifizierten externen Quellenadresse zu einer spezifizierten Adresse der Speichereinheit gemäß der Instruktion zu laden;
eine Vektorspeicher (Vector Storage, VS)-Instruktion, wobei die Vorrichtung dafür konfiguriert ist, gemäß der Instruktion Vektordaten einer spezifizierten Größe von einer spezifizierten Adresse der Speichereinheit in eine externe Zieladresse zu laden; und
eine Vektorbewegungs (Vector Movement, VMOVE)-Instruktion, wobei die Vorrichtung dafür konfiguriert ist, gemäß der Instruktion Vektordaten einer spezifizierten Größe von einer spezifizierten Adresse der Speichereinheit in eine andere spezifizierte Adresse der Speichereinheit zu speichern.

13. Vektor-Außenprodukt-Operationsverfahren, das dafür konfiguriert ist, eine Vektor-Außenprodukt-Operation gemäß einer Vektor-Außenprodukt-Operationsinstruktion durchzuführen, wobei das Verfahren umfasst:
S1, Speichern von Vektoren unter Verwendung einer Speichereinheit;
S2, Speichern von Vektoradressen unter Verwendung mehrerer Registereinheiten, wobei die Vektoradressen Adressen der in der Speichereinheit gespeicherten Vektoren sind; und
S3, unter Verwendung einer Vektor-Außenprodukt-Operationseinheit, Erfassen der Vektor-Außenprodukt-Operationsinstruktion, Erfassen von Vektoradressen gemäß der Vektor-Außenprodukt-Operationsinstruktion, Erfassen von Vektoren gemäß den erfassten Vektoradressen, und Durchführen der Vektor-Außenprodukt-Operation an den erfassten Vektoren, um ein Ergebnis der Vektor-Außenprodukt-Operation zu erhalten;
wobei die Vektor-Außenprodukt-Operationsinstruktion einen Operationscode und mindestens zwei Operationsfelder umfasst;
wobei der Operationscode dafür konfiguriert ist, eine Funktion der Vektor-Außenprodukt-Operationsinstruktion anzugeben, und die mindestens zwei Operationsfelder dafür konfiguriert sind, Dateninformationen der Vektor-Außenprodukt-Operationsinstruktion anzugeben;
wobei die Dateninformationen mindestens zwei Registereinheitsnummern umfassen;
wobei das Verfahren des Weiteren umfasst:
Zugreifen, durch die Vektor-Außenprodukt-Operationseinheit, auf mindestens zwei Registereinheiten der mehreren Registereinheiten gemäß den mindestens zwei Registereinheitsnummern, um eine Vektoradresse zu erfassen;
wobei eine Startadresse und eine Länge des Vektors jeweils aus den mindestens zwei Registereinheiten gemäß den mindestens zwei Registereinheitsnummern erhalten werden, um den in einer entsprechenden Adresse gespeicherten Vektor aus der Speichereinheit gemäß der Startadresse und der Länge des Vektors zu erhalten.

14. Verfahren nach Anspruch 13, das des Weiteren die folgenden Operationen vor der Operation S3 umfasst:
Speichern, unter Verwendung einer Instruktions-Cache-Einheit, von Vektor-Außenprodukt-Operationsinstruktionen;
Erfassen, unter Verwendung einer Instruktionsverarbeitungseinheit, einer Vektor-Außenprodukt-Operationsinstruktion aus den gespeicherten Vektor-Außenprodukt-Operationsinstruktionen;
Decodieren, unter Verwendung eines Decodiermoduls, der erfassten Vektor-Außenprodukt-Operationsinstruktion; und
sequentielles Speichern der decodierten Vektor-Außenprodukt-Operationsinstruktion.

15. Verfahren nach Anspruch 13, das des Weiteren, unter Verwendung einer Abhängigkeitsbeziehungs-Verarbeitungseinheit, die folgenden Operationen vor der Operation S3 umfasst:
Bestimmen, ob die Vektor-Außenprodukt-Operationsinstruktion auf denselben Vektor zugreift wie eine vorherige Vektor-Außenprodukt-Operationsinstruktion; und
Speichern der Vektor-Außenprodukt-Operationsinstruktion in einer Speicherwarteschlange auf der Grundlage einer Bestimmung, dass die Vektor-Außenprodukt-Operationsinstruktion auf denselben Vektor zugreift wie die vorherige Vektor-Außenprodukt-Operationsinstruktion, und
Voranschreiten zu Operation S3, nachdem die Ausführung der vorherigen Vektor-Außenprodukt-Operationsinstruktion abgeschlossen ist; oder
direktes Voranschreiten zu Operation S3 auf der Grundlage einer Bestimmung, dass die Vektor-Außenprodukt-Operationsinstruktion nicht auf denselben Vektor zugreift wie die vorherige Vektor-Außenprodukt-Operationsinstruktion.

16. Verfahren nach Anspruch 13, das des Weiteren umfasst:
Speichern des Ergebnisses der Vektor-Außenprodukt-Operation.

17. Verfahren nach Anspruch 13, wobei die Operation S1 umfasst:
Speichern der Vektoren in einem Scratchpad-Speicher.

18. Verfahren nach Anspruch 13, wobei die Vektor-Außenprodukt-Operation eine Additionsoperation, eine nicht-lineare Operation und eine Multiplikationsoperation umfasst.

19. Verfahren nach Anspruch 13, wobei die Vektor-Außenprodukt-Operationseinheit eine Struktur einer mehrstufigen Pipeline aufweist und die Struktur der mehrstufigen Pipeline eine Pipeline (1) einer ersten Stufe, eine Pipeline (2) einer zweiten Stufe und eine Pipeline (3) einer dritten Stufe umfasst; wobei die Additionsoperation in der Pipeline (1) einer ersten Stufe durchgeführt wird, die nicht-lineare Operation in der Pipeline (2) einer zweiten Stufe durchgeführt wird und die Multiplikationsoperation in einer Pipeline (3) einer dritten Stufe durchgeführt wird.

20. Verfahren nach einem der Ansprüche 13-19, das des Weiteren umfasst:
jeweils Vektordaten einer spezifizierten Größe von spezifizierten Adressen der Speichereinheit abzurufen,
eine Außenprodukt-Operation an zwei Vektoren in einer Vektorberechnungseinheit durchzuführen, und
ein Ergebnis in eine spezifizierte Adresse eines Skalarregisters gemäß der Vektor-Außenprodukt-Operationsinstruktion zurückzuschreiben.

21. Verfahren nach Anspruch 20, wobei die Vektor-Außenprodukt-Operationsinstruktion des Weiteren eines oder mehrere von Folgendem umfasst:
eine Vektorabruf (Vector Retrieval, VR)-Instruktion, wobei das Verfahren umfasst:
Abrufen von Vektordaten einer spezifizierten Größe von einer spezifizierten Adresse der Speichereinheit,
Extrahieren eines Elements eines Vektors gemäß einer spezifizierten Position, um als eine Ausgabe in einer Vektorberechnungseinheit zu dienen,
Zurückschreiben eines Ergebnisses in eine spezifizierte Adresse eines Skalarregisters gemäß der Instruktion;
eine Vektorlade (Vector Load, VLOAD)-Instruktion, wobei das Verfahren umfasst:
Laden von Vektordaten einer spezifizierten Größe von einer spezifizierten externen Quellenadresse zu einer spezifizierten Adresse der Speichereinheit gemäß der Instruktion;
eine Vektorspeicher (Vector Storage, VS)-Instruktion, wobei das Verfahren umfasst:
Speichern von Vektordaten einer spezifizierten Größe von einer spezifizierten Adresse der Speichereinheit in eine externe Zieladresse gemäß der Instruktion;
eine Vektorbewegungs (Vector Movement, VMOVE)-Instruktion, wobei das Verfahren umfasst:
Speichern von Vektordaten einer spezifizierten Größe von einer spezifizierten Adresse der Speichereinheit in eine andere spezifizierte Adresse der Speichereinheit gemäß der genannten Instruktion.

## Revendications

1. Dispositif d'opération de produit dyadique de vecteurs, configuré pour réaliser une opération de produit dyadique de vecteurs en fonction d'une instruction d'opération de produit dyadique de vecteurs, le dispositif comprenant :
une unité de stockage, configurée pour stocker des vecteurs ;
une pluralité d'unités de registre, configurées pour stocker des adresses de vecteurs, dans lequel les adresses de vecteurs sont des adresses des vecteurs stockés dans l'unité de stockage ; et
une unité d'opération de produit dyadique de vecteurs, configurée pour acquérir l'instruction d'opération de produit dyadique de vecteurs, pour acquérir des adresses de vecteurs à partir de l'unité de registre en fonction de l'instruction d'opération de produit dyadique de vecteurs, pour acquérir des vecteurs à partir de l'unité de stockage en fonction des adresses de vecteurs acquises, et pour réaliser l'opération de produit dyadique de vecteurs sur les vecteurs acquis pour obtenir un résultat de l'opération de produit dyadique de vecteurs ;
dans lequel l'instruction d'opération de produit dyadique de vecteurs comprend un code d'opération et au moins deux champs d'opération ;
dans lequel le code d'opération est configuré pour indiquer une fonction de l'instruction d'opération de produit dyadique de vecteurs ; et
dans lequel les au moins deux champs d'opération sont configurés pour indiquer des informations de données de l'instruction d'opération de produit dyadique de vecteurs ;
dans lequel les informations de données comprennent au moins deux numéros d'unités de registre, et l'unité d'opération de produit dyadique de vecteurs est configurée pour accéder aux au moins deux unités de registre de la pluralité d'unités de registre selon les au moins deux numéros d'unités de registre pour acquérir une adresse de vecteur ;
dans lequel une adresse de début et une longueur d'un vecteur sont respectivement obtenues à partir des au moins deux unités de registre en fonction des au moins deux numéros d'unités de registre, pour obtenir le vecteur stocké dans une adresse correspondante à partir de l'unité de stockage en fonction de l'adresse de début et de la longueur du vecteur.

2. Dispositif selon la revendication 1, comprenant en outre :
une unité de mémoire cache d'instructions, configurée pour stocker des instructions d'opération de produit dyadique de vecteurs à exécuter.

3. Dispositif selon la revendication 2, comprenant en outre :
une unité de traitement d'instructions, configurée pour acquérir une instruction d'opération de produit dyadique de vecteurs à partir de l'unité de mémoire cache d'instructions, pour traiter l'instruction d'opération de produit dyadique de vecteurs acquise à partir de l'unité de mémoire cache d'instructions, et pour fournir l'instruction d'opération de produit dyadique de vecteurs traitée pour l'unité d'opération de produit dyadique de vecteurs.

4. Dispositif selon la revendication 3, dans lequel l'unité de traitement d'instructions comprend :
un module de récupération d'instruction, configuré pour acquérir l'instruction d'opération de produit dyadique de vecteurs à partir de l'unité de mémoire cache d'instructions ;
un module de décodage, configuré pour décoder l'instruction d'opération de produit dyadique de vecteurs acquise à partir de l'unité de mémoire cache d'instructions ; et
une file d'attente d'instructions, configurée pour stocker séquentiellement l'instruction d'opération de produit dyadique de vecteurs décodée.

5. Dispositif selon la revendication 1, comprenant en outre une unité de traitement de relation de dépendance configurée pour :
déterminer si l'instruction d'opération de produit dyadique de vecteurs accède ou non au même vecteur qu'une instruction d'opération de produit dyadique de vecteurs précédente, avant que l'unité d'opération de produit dyadique de vecteurs n'acquière l'instruction d'opération de produit dyadique de vecteurs ; et
stocker l'instruction d'opération de produit dyadique de vecteurs dans une file d'attente de stockage sur la base d'une détermination que l'instruction d'opération de produit dyadique de vecteurs accède au même vecteur que l'instruction d'opération de produit dyadique de vecteurs précédente, et fournir l'instruction d'opération de produit dyadique de vecteurs dans la file d'attente de stockage pour l'unité d'opération de produit dyadique de vecteurs après que l'exécution de l'instruction d'opération de produit dyadique de vecteurs est terminée ; ou
fournir directement l'instruction d'opération de produit dyadique de vecteurs pour l'unité d'opération de produit dyadique de vecteurs, sur la base d'une détermination que l'instruction d'opération de produit dyadique de vecteurs n'accède pas au même vecteur que l'instruction d'opération de produit dyadique de vecteurs précédente.

6. Dispositif selon la revendication 1, dans lequel l'unité de stockage est en outre configurée pour stocker le résultat de l'opération de produit dyadique de vecteurs.

7. Dispositif selon la revendication 6, comprenant en outre :
une unité d'entrée/sortie, I/O, configurée pour stocker les vecteurs dans l'unité de stockage ou pour acquérir le résultat de l'opération de produit dyadique de vecteurs à partir de l'unité de stockage.

8. Dispositif selon la revendication 1, dans lequel l'unité de stockage est une mémoire de travail.

9. Dispositif selon la revendication 1, dans lequel l'unité d'opération de produit dyadique de vecteurs comprend une section d'addition, une section d'opération non linéaire et une section de multiplication.

10. Dispositif selon la revendication 9, dans lequel l'unité d'opération de produit dyadique de vecteurs présente une structure de pipeline à plusieurs étages, et la structure de pipeline à plusieurs étages comprend un pipeline de premier étage, un pipeline de deuxième étage et un pipeline de troisième étage ; dans lequel la section d'addition est agencée dans le pipeline de premier étage, la section d'opération non linéaire est agencée dans le pipeline de deuxième étage, et la section de multiplication est agencée dans le pipeline de troisième étage.

11. Dispositif selon l'une quelconque des revendications 1 à 10, dans lequel le dispositif est configuré pour :
récupérer respectivement des données de vecteurs d'une taille spécifiée à partir d'adresses spécifiées de l'unité de stockage,
réaliser une opération de produit dyadique sur deux vecteurs dans une unité de calcul de vecteurs, et
réécrire un résultat dans une adresse spécifiée d'un registre scalaire, en fonction de l'instruction d'opération de produit dyadique de vecteurs.

12. Dispositif selon la revendication 11, dans lequel l'instruction d'opération de produit dyadique de vecteurs comprend en outre l'une quelconque de ce qui suit :
une instruction de récupération de vecteurs, VR, dans lequel le dispositif est configuré pour récupérer des données de vecteurs d'une taille spécifiée à partir d'une adresse spécifiée de l'unité de stockage, pour extraire un élément d'un vecteur en fonction d'une position spécifiée pour servir de sortie dans une unité de calcul de vecteurs, pour réécrire un résultat dans une adresse spécifiée dans un registre scalaire, en fonction de ladite instruction ;
une instruction de chargement de vecteur, VLOAD, dans lequel le dispositif est configuré pour charger des données de vecteurs d'une taille spécifiée à partir d'une adresse source externe spécifiée à une adresse spécifiée de l'unité de stockage, en fonction de ladite instruction ;
une instruction de stockage de vecteurs, VS, dans lequel le dispositif est configuré pour stocker des données de vecteurs d'une taille spécifiée à partir d'une adresse spécifiée de l'unité de stockage dans une adresse de destination externe, en fonction de ladite instruction ; et
une instruction de déplacement de vecteurs, VMOVE, dans lequel le dispositif est configuré pour stocker des données de vecteurs d'une taille spécifiée à partir d'une adresse spécifiée de l'unité de stockage dans une autre adresse spécifiée de l'unité de stockage, en fonction de ladite instruction.

13. Procédé d'opération de produit dyadique de vecteurs, configuré pour réaliser une opération de produit dyadique de vecteurs en fonction d'une instruction d'opération de produit dyadique de vecteurs, le procédé comprenant :
S1, le stockage de vecteurs à l'aide d'une unité de stockage ;
S2, le stockage d'adresses de vecteurs à l'aide d'une pluralité d'unités de registre, dans lequel les adresses de vecteurs sont des adresses des vecteurs stockés dans l'unité de stockage ; et
S3, à l'aide d'une unité d'opération de produit dyadique de vecteurs, l'acquisition de l'instruction d'opération de produit dyadique de vecteurs, l'acquisition d'adresses de vecteurs en fonction de l'instruction d'opération de produit dyadique de vecteurs, l'acquisition de vecteurs en fonction des adresses de vecteurs acquises, et la réalisation de l'opération de produit dyadique de vecteurs sur les vecteurs acquis pour obtenir un résultat de l'opération de produit dyadique de vecteurs ;
dans lequel l'instruction d'opération de produit dyadique de vecteurs comprend un code d'opération et au moins deux champs d'opération ;
dans lequel le code d'opération est configuré pour indiquer une fonction de l'instruction d'opération de produit dyadique de vecteurs et les au moins deux champs d'opération sont configurés pour indiquer des informations de données de l'instruction d'opération de produit dyadique de vecteurs ;
dans lequel les informations de données comprennent au moins deux numéros d'unités de registre ;
dans lequel le procédé comprend en outre :
l'accès, par l'unité d'opération de produit dyadique de vecteurs, à au moins deux unités de registre de la pluralité d'unités de registre selon les au moins deux numéros d'unités de registre pour acquérir une adresse de vecteur ;
dans lequel une adresse de début et une longueur d'un vecteur sont respectivement obtenues à partir des au moins deux unités de registre en fonction des au moins deux numéros d'unités de registre, pour obtenir le vecteur stocké dans une adresse correspondante à partir de l'unité de stockage en fonction de l'adresse de début et de la longueur du vecteur.

14. Procédé selon la revendication 13, comprenant en outre les opérations suivantes avant l'opération S3 :
le stockage, à l'aide d'une unité de mémoire cache d'instructions d'opération de produit dyadique de vecteurs ;
l'acquisition, à l'aide d'une unité de traitement d'instructions, d'une instruction d'opération de produit dyadique de vecteurs à partir des instructions d'opération de produit dyadique de vecteurs stockées ;
le décodage, à l'aide du module de décodage, de l'instruction d'opération de produit dyadique de vecteurs acquise ; et
le stockage séquentiellement de l'instruction d'opération de produit dyadique de vecteurs décodée.

15. Procédé selon la revendication 13, comprenant en outre, à l'aide d'une unité de traitement de relation de dépendance, les opérations suivantes avant l'opération S3 :
la détermination si l'instruction d'opération de produit dyadique de vecteurs accède ou non au même vecteur qu'une instruction d'opération de produit dyadique de vecteurs précédente ; et
le stockage de l'instruction d'opération de produit dyadique de vecteurs dans une file d'attente de stockage sur la base d'une détermination que l'instruction d'opération de produit dyadique de vecteurs accède au même vecteur que l'instruction d'opération de produit dyadique de vecteurs précédente, et le passage à l'opération S3 après que l'exécution de l'instruction d'opération de produit dyadique de vecteurs est terminée ; ou
le passage directement à l'opération S3, sur la base d'une détermination que l'instruction d'opération de produit dyadique de vecteurs n'accède pas au même vecteur que l'instruction d'opération de produit dyadique de vecteurs précédente.

16. Procédé selon la revendication 13, comprenant en outre :
le stockage du résultat de l'opération de produit dyadique de vecteurs.

17. Procédé selon la revendication 13, dans lequel l'opération S1 comprend le stockage des vecteurs dans une mémoire de travail.

18. Procédé selon la revendication 13, dans lequel l'opération de produit dyadique de vecteurs comprend une opération d'addition, une opération non linéaire et une opération de multiplication.

19. Procédé selon la revendication 13, dans lequel l'unité d'opération de produit dyadique de vecteurs présente une structure de pipeline à plusieurs étages, et la structure de pipeline à plusieurs étages comprend un pipeline de premier étage (1), un pipeline de deuxième étage (2) et un pipeline de troisième étage (3) ; dans lequel l'opération d'addition est réalisée au niveau du pipeline de premier étage (1), l'opération d'opération non linéaire est réalisée au niveau du pipeline de deuxième étage (2), et l'opération de multiplication est réalisée au niveau du pipeline de troisième étage (3).

20. Procédé selon l'une quelconque des revendications 13 à 19, comprenant en outre :
la récupération respectivement de données de vecteurs d'une taille spécifiée à partir d'adresses spécifiées de l'unité de stockage,
la réalisation d'une opération de produit dyadique sur deux vecteurs dans une unité de calcul de vecteurs, et
la réécriture d'un résultat dans une adresse spécifiée d'un registre scalaire, en fonction de l'instruction d'opération de produit dyadique de vecteurs.

21. Procédé selon la revendication 20, dans lequel l'instruction d'opération de produit dyadique de vecteurs comprend en outre l'une quelconque de ce qui suit :
une instruction de récupération de vecteurs, VR, dans lequel le procédé comprend :
la récupération de données de vecteurs d'une taille spécifiée à partir d'une adresse spécifiée de l'unité de stockage,
l'extraction d'un élément d'un vecteur en fonction d'une position spécifiée pour servir de sortie dans une unité de calcul de vecteurs,
la réécriture d'un résultat dans une adresse spécifiée dans un registre scalaire, en fonction de ladite instruction ;
une instruction de chargement de vecteur, VLOAD, dans lequel le procédé comprend :
le chargement de données de vecteurs d'une taille spécifiée à partir d'une adresse source externe spécifiée à une adresse spécifiée de l'unité de stockage, en fonction de ladite instruction ;
une instruction de stockage de vecteurs, VS, dans lequel le procédé comprend :
le stockage de données de vecteurs d'une taille spécifiée à partir d'une adresse spécifiée de l'unité de stockage dans une adresse de destination externe, en fonction de ladite instruction ; et
une instruction de déplacement de vecteurs, VMOVE, dans lequel le procédé comprend :
le stockage de données de vecteurs d'une taille spécifiée à partir d'une adresse spécifiée de l'unité de stockage dans une autre adresse spécifiée de l'unité de stockage, en fonction de ladite instruction.
